# EUROPEAN PATENT APPLICATION

(11) **EP 4 714 630 A1**
(43) Date of publication of application: **25.03.2026**
(21) Application number: 24201165.8
(22) Date of filing: 18.09.2024
(51) Int. Cl.: B29C 45/14, B29C 45/16, B29C 45/26, B29C 45/37, B23K 26/00

(54) **METHOD OF MAKING AN INSERT FOR A MOLDING MACHINE AND OF MANUFACTURING A TWO-COMPONENT PLASTIC PART**

(71) Applicant: Braun GmbH, 61476 Kronberg im Taunus (DE)
(72) Inventor: SEITZ, André, 97828 MARKTHEIDENFELD (DE); KUHN, Alexander, 97828 Marktheidenfeld (DE)
(74) Representative: P&G Patent Germany

(57) **Abstract**

The present disclosure is concerned with a method of making an insert for an injection molding machine comprising the steps of providing a metal block, removing material from the metal block by eroding and/or milling so that at least one depression is formed for at least partly defining a mold cavity for molding a first component of a two-component plastic part, the depression being defined by at least one bordering wall of the metal block, where between a base surface of the depression and at least a portion of the bordering wall a material transition area is present having a first radius, removing material from the material transition area by applying laser light so that the resulting material transition area has a second radius smaller than the first radius.

## Description

### FIELD OF THE INVENTION

The present application is concerned with a method for making an insert for an injection molding machine and with the manufacturing of a plastic part having at least two plastic components using the insert.

### BACKGROUND OF THE INVENTION

It is generally known that inserts can be used in plastic injection molding machines when making two-component or multi-component plastic parts. A first plastic component is injection molded using the insert. To avoid unwanted flowing of material of a second plastic component injected into a mold cavity over a first plastic component inserted into the mold cavity, the insert should define the geometry of the first part made by the first plastic component with high precision. Specifically, the edges of the first part that will come into contact with the second plastic component should be defined as precisely as possible. In order to achieve this, it is known to assemble the insert from two parts so that an edge between the two parts has essentially no radius.

It is an object of the present disclosure to provide a method of making an insert from a single part in which an edge defining the first plastic component is sharp enough so that material overflow in a second process step is effectively avoided or at least reduced. Further, it is an object of the present disclosure to provide a method for manufacturing a plastic part having at least two components using an insert.

### SUMMARY OF THE INVENTION

In accordance with at least one aspect, a method of making an insert for an injection molding machine is provided, where the method comprises the steps of
- providing a metal block;
- removing material from the metal block by eroding and/or milling so that at least one depression is formed for at least partly defining a mold cavity for molding a first component of a two-component plastic part, the depression being defined by at least one bordering wall of the metal block, where between a base surface of the depression and at least a portion of the bordering wall a material transition area is present having a first radius;
- removing material from the material transition area by applying laser light so that the resulting material transition area has a second radius smaller than the first radius.

In accordance with at least one aspect, a method of manufacturing a two-component plastic part is provide, which method comprises the steps of:
- making an insert for an injection molding machine in accordance with the previous paragraph;
- inserting the insert into a first mold half;
- pushing a second mold half against the first mold half so that a first mold cavity is formed that is a least partly defined by the insert;
- injection a first plastic material into the first mold cavity to form a first component of the two-component plastic part having a first edge that is defined by the material transition area having the second radius;
- inserting the first component into a second mold cavity; and
- injection a second plastic material into the second mold cavity to form the two-component plastic part.

In accordance with at least one aspect, a method of making an insert for an injection molding machine is provided, where the method comprises the steps of
- providing a metal block;
- removing material from the metal block by eroding and/or milling so that at least one depression is formed for at least partly defining a mold cavity for molding a first component of a two-component plastic part, the depression being defined by at least one bordering wall of the metal block, where between a base surface of the depression and at least a portion of the bordering wall a material transition area is present having a first radius;
- removing material from the material transition area by applying laser light so that a groove is created between the bordering wall and the base surface.

In accordance with at least one aspect, a method of manufacturing a two-component plastic part is provide, which method comprises the steps of:
- making an insert for an injection molding machine in accordance with the previous paragraph;
- pushing a second mold half against the first mold half so that a first mold cavity is formed that is a least partly defined by the insert;
- injection a first plastic material into the first mold cavity to form a first component of the two-component plastic part having a protruding edge that at least partly surrounds a cut-out or depression of the first component, which protruding edge was formed by the first plastic material flowing at least partly into the groove;
- inserting the first component into a second mold cavity;
- injection a second plastic material into the second mold cavity to form the two-component plastic part.

### BRIEF DESCRIPTION OF THE DRAWINGS

The present disclosure will be further elucidated by a detailed description of example embodiments and with reference to figures. In the figures
- Fig. 1A: is a schematic depiction of a cross-section through a portion of an insert made from two insert parts that define an edge of an article to be injection molded having a radius R₁, where R₁ = 0;
- Fig. 1B: is a schematic depiction of a cross-section through a portion of an insert made from one single metal block using usual techniques that defines an edge between a bordering wall and a base surface by a material transition area having a radius R₂, where R₂ ≥ 0.1mm;
- Fig. 2A: is a schematic depiction of a method step in which material from the material transition are of the insert shown in Fig. 1B is removed by applying laser light so that a radius R₃ results, where R₃ < 0.1 mm and typically R₃ ≤ about 0.5 mm;
- Fig. 2B: is a schematic depiction of a method step in which material from the material transition are of the insert shown in Fig. 1B is removed by applying laser light so that a groove is formed;
- Fig. 3A: is a picture of a plastic injection molded two-component article which here is a button insert for an electric toothbrush;
- Fig. 3B: is a magnification from Fig. 3A showing that the radius of the used single part insert for manufacturing the hard plastic component part led to material overflow in the edge area, specifically close to the injection point;
- Fig. 4: is a depiction of an example first component of a two-component plastic part;
- Fig. 5: is a magnification similar to the picture of Fig. 3B showing the result when an insert made by a proposed manufacturing method is used, where it can be seen that the material overflow was considerable reduced.

### DETAILED DESCRIPTION OF THE INVENTION

The present disclosure is concerned with the manufacture of a single-part insert for a plastic injection molding machine and with the manufacture of an at least two-component plastic part made by plastic injection molding, where an insert as proposed herein is used.

An insert for a plastic injection molding machine is used to define at least a portion of a mold cavity for injection molding of a plastic part, typically for injection molding of a first component of an at least two-component plastic part. To define the respective mold cavity, an insert is made by first providing a metal block and then by removing material from the metal block. In the removal of material from the metal block, typically some standard metal machining processes are used such as erosion and/or milling. Typically, the cavity surface may be finished by a step of, in particular manual, polishing. By the metal removal process, at least in one portion of the insert, a depression is formed that is comprising a base surface and a bordering wall. The base surface is defining at least a portion of a lower surface of the depression and the bordering wall extends essentially from the base surface to a different surface, e.g., a top surface, of the insert. Due to the nature of the mechanical material removal processes, a material transition area is formed between the base surface and the bordering wall as such processes do not allow to remove the material such that a more or less perfect 90 degrees edge or corner is defined. The material transition area may be characterized by a radius, where the radius approximates the real material transition area that may not have an exact arc shape.

As was mentioned in the background section, a more or less perfect 90 degrees edge or corner may be realized by using a two-part or multi-part insert, where one part realizes the base surface and the other part realizes the bordering wall. But this multi-part insert technology is on the one hand more expensive and on the other hand may not be feasible due to certain machine considerations including available size or volume for the insert. Still, this shall not exclude that the insert discussed herein may be made as a two-part or multi-part insert, but where the insert parts interact in a different area of the insert.

The present disclosure thus proposes an improvement of the mentioned manufacture of an insert, where a further step is included in the manufacturing process, namely a step of material removal from the material transition area by means of a laser, specifically an ultra-short pulse laser applying laser pulses in the attosecond, femtosecond or picosecond range. Laser pulses in this temporal length range may lead to an evaporation of the ablated metal material as the energy is absorbed within a very short time period. Laser pulses of higher length may partly melt the metal material and may thus create uneven structures. By applying ultra-short laser pulses and ablating material from the material transition area, a radius may result that is considerably smaller than the radius achievable by using the mentioned standard mechanical material removal technologies. E.g., a radius of at best R₁ ≥ 0.1 mm may result by erosion and/or milling and after polishing the radius may be increased to R₁ ≥ 0.2 mm. With the laser ablation process, a radius of R₃ < 0.1 mm may result, specifically the resulting radius may be R₃ ≤ 0.05 mm. Alternatively, the laser ablation process may be continued until a groove between the base surface and the bordering wall is created. The dimensions of the groove may comprise a width in a range of between 0.01 mm to 0.50 mm, in particular a range of between 0.02 mm to 0.20 mm and further in particular of about 0.05 mm. The dimensions of the groove may comprise a depth in the range in between 0.005 mm to 0.50 mm, in particular a range in between 0.01 mm to 0.10 mm and further in particular of about 0.05 mm. The result of such a groove in the plastic injection molding process is the generation of a small projection or abutting edge of the first component.

In previous paragraphs, two alternatives were described for improving an insert made by erosion and/or milling and optionally by a subsequent polishing step, where laser light is applied onto a material transition area between a base surface and a bordering wall, in particular where the bordering wall and the base surface extend at an essentially 90 degrees angle to each other. The laser light may be applied in the form of ultrashort pulses having a pulse length in the attosecond to picosecond range. Such short laser light pulse typically ablates the metal material present in the material transition area by vaporization, which metal vapor can be extracted by suction / exhausted to effectively avoid that the metal vapor solidifies again on the inserts surfaces intended for at least partly defining the mold cavity. The laser pulses may be applied so that a previous radius of the material transition area is reduced, e.g., from a radius of R₂ ≥ 0.1 mm to a lower radius of R₃ < 0.1 mm and specifically of, e.g., R₃ ≤ 0.05 mm. This is called alternative 1. The laser light may be applied for longer until a groove is formed between the bordering wall and the base surface. The potential dimensions of the groove were mentioned before. This is called alternative 2.

In accordance with alternative 1, an insert made in this manner is inserted into a first mold half of a mold machine. The insert thus forms at least a portion of a first cavity defined by the respective mold half. The complete first cavity is defined once a second mold half is pushed against the first mold half. Then, a first plastic material can be injected into the cavity to form a first intermediate plastic part, i.e., a first component of an at least two-component plastic part or two-component injection molding part. Subsequently, the first component or first intermediate plastic part is used to define a portion of a second cavity. This may happen, e.g., by leaving the first component in a mold half and moving the respective mold half to different mold half and pushing the two mold halves against each other to form the second cavity. The second cavity then comprises the first component. A second plastic material is then injected into the second cavity and a two-component plastic part is formed. The two-component plastic part may be a final article or may be an intermediate plastic part that may be inserted into a third cavity for adding a third plastic material by another plastic injection molding step. In accordance with the present disclosure, the edge of the first component that is formed by the bordering wall and the base surface with the material transition area in between serves as an abutting edge for the second plastic material injected into the second cavity.

In accordance with alternative 2, the process is essentially as it was described with respect to alternative 1, but a small projection is formed at the abutting edge in the first plastic injection molding step, which projection is essentially the negative of the groove formed between the bordering wall and the base surface. When the first component is then inserted into the second cavity and the two mold halves defining the second cavity are pushed together, the projection becomes plastically deformed and thus effectively avoids any clearance between the abutting edge and the cavity walls.

When using a first component comprising an abutting edge that is a negative of an insert that was made only with the described standard mechanical material removal processes, the "roundness" of the abutting edge allows a second plastic material to flow beyond the abutting edge when the second plastic material is injected into the second cavity. This results in some material overflow area(s) that may be visible to a user or consumer and may thus reduce the aesthetical appearance of the at least two-component plastic part. Specifically in case the at least two-component plastic part shall be used in a premium product, e.g., an electric toothbrush, the aesthetical impression may not be adequate for the "premiumness" of the product. In addition to a reduced optical quality, the material overflow area may over time become peeled loose from the underlying first plastic component. Small pockets may be created between the second plastic material and the first material, in which pockets mold and/or bacteria may start to grow.

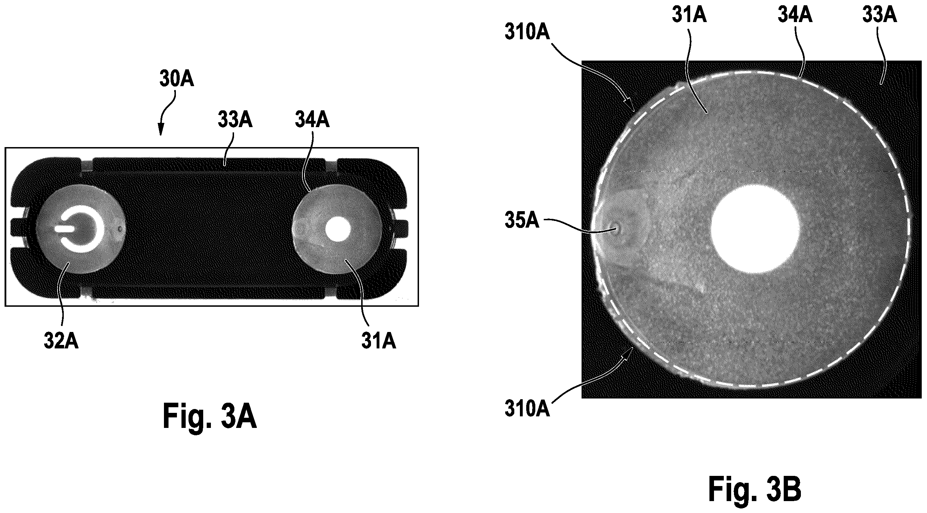

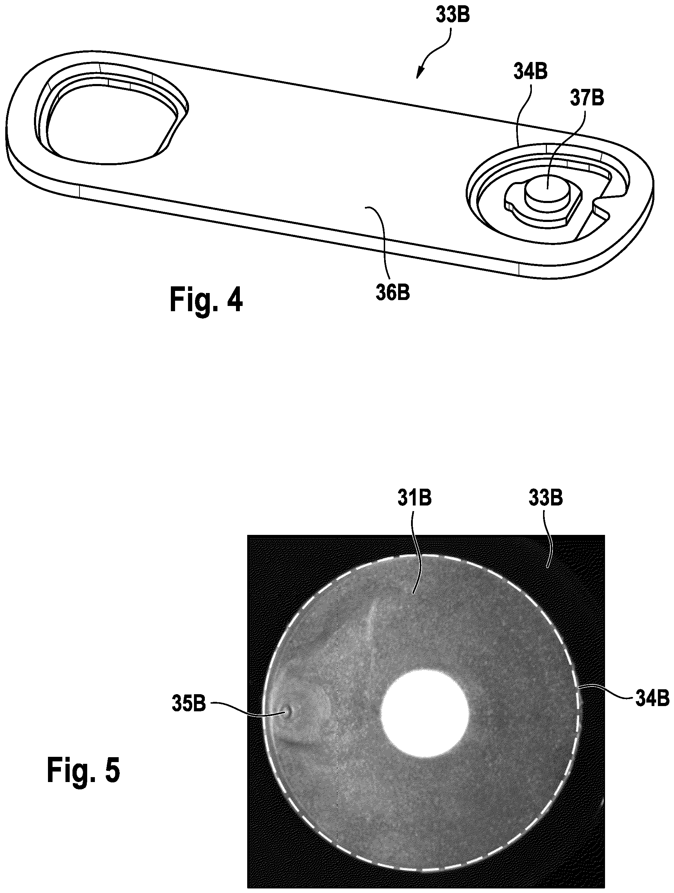

The inserts made in accordance with alternatives 1 or 2 as described reduce or effectively avoid the material overflow tendency and the resulting at least two-component plastic part has then a higher aesthetical appearance and is not as prone to developing pockets or the like - see also Figs. 3B and 5 for a comparison of the resulting quality.

The first plastic material may be a "hard" plastic material having a Shore D hardness of above 20, in particular of above 50. The second plastic material may be a "soft" plastic material or thermoplastic elastomer (TPE) having a Shore A hardness of below 80, in particular of below 50, and further in particular of below 30.

In the second injection molding step in which the second plastic material is injected into the second cavity, an injection point for the second plastic material may be provided in close proximity of the abutting edge of the first component, specifically the distance between the abutting edge and the injection point may be less than 4.0 mm, in particular less than 3.0 mm and further in particular less than 2.0 mm.

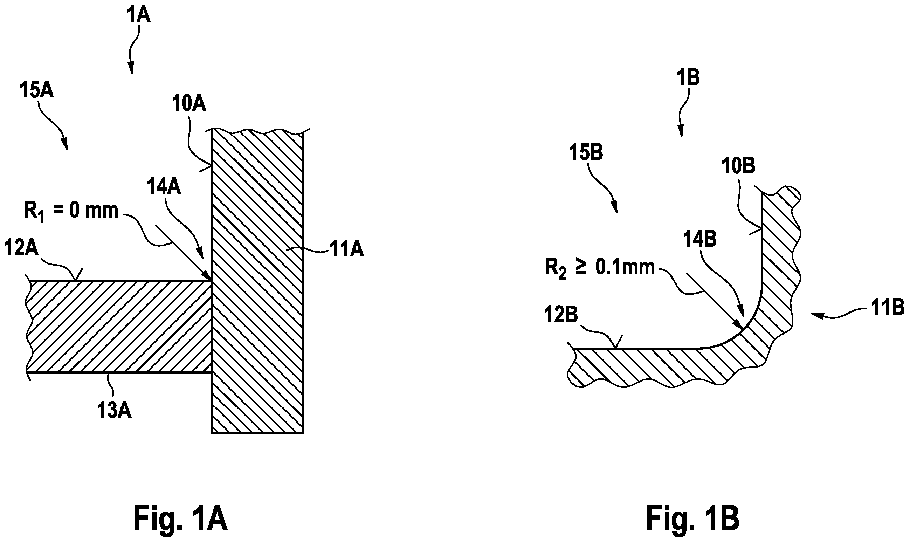

Fig. 1A is a schematic cross-sectional cut through a portion of an insert 1A that is assembled from two insert sub-units 11A and 13A. The first insert sub-unit 11A defines a bordering wall 10A of a depression 15A, which depression defines at least a part of a cavity for injection molding of a plastic part in a plastic injection molding machine comprising the insert in one mold half. The second insert sub-unit 13A defines a base surface of the depression 15A. Due to the assembly of the insert 1A from two individually manufactured insert sub-units 11A and 13A, the corner or edge 14A at the point or line where the two insert sub-units 11A and 13A meet to define the depression 15A has essentially a radius of R₁ = 0 mm. This allows a very precise injection molding of a respective corner or edge of a plastic part in the respective mold cavity.

Fig. 1B is a schematic cross sectional cut through a processed single metal block 11B from which at least a portion of an insert 1B is made. The metal block 11B may have been treated by erosion and/or milling to remove material to define a depression 15B. Such standard mechanical material removal processes may lead to a material transition area 14B where a bordering wall 10B and a base surface 12B transition into each other with a radius R₂ ≥ 0.1 mm, which means that a respective corner or edge of a plastic part to be injection molded is not as precisely defined as in the example discussed with respect to Fig. 1A. In order to achieve an aesthetically appealing surface of the injection molded plastic part, the inner surfaces of the depression 15B, including the bordering wall 10B and the base surface 12B, may be treated by, in particular manual, polishing. Thus, the radius resulting from the processing steps may easily be increased to R₂ ≥ 0.2 mm. The effect of such an edge of a plastic part injection molded in a cavity defined at least around the respective edge by a single metal block cavity having a radius of R₂ ≥ 0.1 mm on a further step of injection molding of a second plastic component that touches the edge is shown in Figs. 3A and 3B and is discussed in the respective description referring to these figures further below.

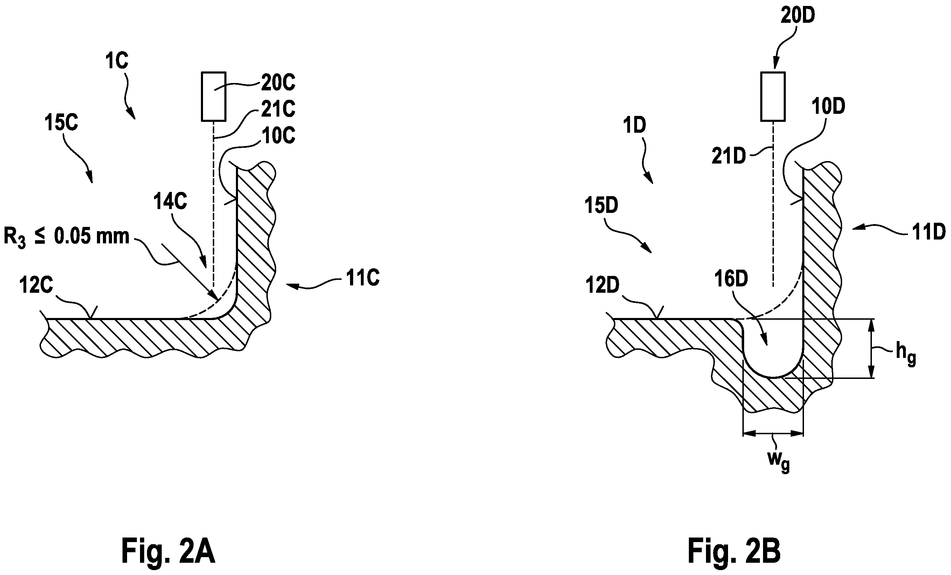

Fig. 2A shows an insert 1C that results from a further processing step in which laser light and specifically laser light pulses are applied at the material transition area 14B shown in Fig. 1B to remove further material so that a material transition area 14C results where the radius achieved in the previously described mechanical material removal processes is reduced. A radius R₃ ≤ 0.05 mm may result. The cross-sectional depiction of Fig. 2A shows again a portion of an insert 1C made from a single processed metal block 11C that defines a bordering wall 10C and a base surface 12C that transition into each other in a material transition area 14C having a radius of, e.g., R₃ ≤ 0.05 mm. It is shown in Fig. 2A that a laser 20C may be used to apply laser light 21C in pulses to remove material from the material transition area 14C to reduce the previously achieved radius.

Fig. 2B shows an insert 1D that results when a laser 20D is utilized to apply laser light 21D and specifically laser light pulses as mentioned with respect to Fig. 2A for an extended period. The material ablation process will then lead to a groove 16D between a bordering wall 10D and a base surface 12D created at a single metal block 11D to define at least a portion of a depression 15D. The resulting groove 16D has a width w_{g} and a height h_{g}. The width w_{g} of the groove may be in the range of between 0.01 mm to 0.50 mm, in particular a range in between 0.02 mm to 0.20 mm and further in particular of about 0.05 mm. The height h_{g} of the groove may be in the range of between 0.005 mm to 0.50 mm, in particular a range in between 0.01 mm to 0.10 mm and further in particular of about 0.05 mm.

Fig. 3A is a photographic image of an example two-component plastic injection molding article 30A that comprises a first component 33A made from a first plastic material and two second components 31A and 32A made from a second plastic material. The first component 33A may be made in a first plastic injection molding step where a first plastic material is injected into a first cavity of a first mold, which first cavity is at least partly defined by an insert as previously discussed with respect to Fig. 1B. The edge comprising the material transition area 14B as shown in Fig. 1B results in an edge 34A that envelopes here a circular clearing in the first component 33A, but it is of course obvious to a person skilled in the art that the structure of the circular clearing is merely an example.

Fig. 3B is a magnification of the two-component plastic part 30A shown in Fig. 3A, where the second component 31A is surrounded by the first component 33A. A dashed ring is overlaid with the photographic image in alignment with the circular edge 34A so that it can be seen that material overflow areas 310A exist, where in the plastic injection molding step of the second component 31A the second plastic material was flowing over the edge 34D and now forms a film of second material on the first component 33A. It is notable that the material overflow areas 310A are particularly pronounced around an injection point 35A where the pressure during the injection is potentially highest. The thin film of the second plastic material in the material overflow areas 310A may cause at least one of two issues. First, the material overflow areas are from an aesthetical point of view undesirable, in particular in case the plastic part 30A is embedded into a premium product such as an electric toothbrush. Second, the thin film of the second material in the material overflow areas 310A may over time become peeled loose so that pockets are formed that may support grow of mold and/or bacteria.

Fig. 4 is a depiction of an example first component 33B of a two-component plastic part. The first component 33B comprises a frame structure 36B that has a clearing along which the first edge 34B is present and an isolated portion 37B that will become embedded in the second plastic material when the second plastic material is injection molded into the second cavity.

Fig. 5 is a magnification of a portion of an example two-component plastic part coinciding with the magnification shown in Fig. 3B, but where an insert in accordance with the present disclosure was used in the manufacture of the two-component plastic part. A second component 31B is shown that was injection molded into a circular clearance in a first component 33B having an abutting edge 34B. A white dashed line is overlaid onto the abutting edge 34B. The visible size of material overflow areas has been considerably reduced in comparison with Fig. 3B and hardly any material overflow area is visible and is thus also not indicated. This is specifically true for the vicinity of an injection point 35B, where the injection pressure of the second plastic material is highest in the plastic injection molding process. It is thus shown that an insert made in accordance with the present disclosure has an effect on the size of the material overflow areas and thus on the aesthetical impression created by the two-component part on a consumer.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A method of making an insert for an injection molding machine comprising the steps of:
providing a metal block;
removing material from the metal block by eroding and/or milling so that at least one depression is formed for at least partly defining a mold cavity for molding a first component of a two-component plastic part, the depression being defined by at least one bordering wall of the metal block, where between a base surface of the depression and at least a portion of the bordering wall a material transition area is present having a first radius;
removing material from the material transition area by applying laser light so that the resulting material transition area has a second radius smaller than the first radius.

2. The method in accordance with claim 1, wherein the first radius is about or above 0.1 mm, in particular wherein the first radius is about or above 0.2 mm.

3. The method in accordance with claims 1 or claim 2, wherein the second radius is about or below 0.05 mm.

4. A method of making an insert for an injection molding machine comprising the steps of:
providing a metal block;
removing material from the metal block by eroding and/or milling so that at least one depression is formed for at least partly defining a mold cavity for molding a first component of a two-component plastic part, the depression being defined by at least one bordering wall of the metal block, where between a base surface of the depression and at least a portion of the bordering wall a material transition area is present having a first radius;
removing material from the material transition area by applying laser light so that a groove is created between the bordering wall and the base surface.

5. The method in accordance with claim 4, wherein a width of the groove is in the range of between 0.01 mm and 0.50 mm, in particular in a range of between 0.02 mm and 0.20 mm, further in particular of about 0.05 mm.

6. The method in accordance with claims 4 or claim 5, wherein a depth of the groove is in a range of between 0.005 mm and 0.20 mm, in particular in a range of between 0.01 mm and 0.10 mm, further in particular of about 0.05 mm.

7. The method in accordance with one of claims 1 to 6, wherein the laser light is applied in form of ultrashort laser pulses, specifically where the length of the pulses is in in a range of between 1 attosecond and 1 nanosecond.

8. A method of manufacturing a two-component plastic part, comprising the steps of:
making an insert for an injection molding machine in accordance with any one of claims 1, 2, 3 or claim 7 to the extent claim 7 depends on one of claims 1 to 3;
inserting the insert into a first mold half;
pushing a second mold half against the first mold half so that a first mold cavity is formed that is a least partly defined by the insert;
injection a first plastic material into the first mold cavity to form a first component of the two-component plastic part having a first edge that is defined by the material transition area having the second radius;
inserting the first component into a second mold cavity;
injection a second plastic material into the second mold cavity to form the two-component plastic part.

9. A method of manufacturing a two-component plastic part, comprising the steps of
making an insert for an injection molding machine in accordance with any one of claims 4 to 7;
inserting the insert into a first mold half;
pushing a second mold half against the first mold half so that a first mold cavity is formed that is a least partly defined by the insert;
injection a first plastic material into the first mold cavity to form a first component of the two-component plastic part having a protruding edge that at least partly surrounds a cut-out or depression of the first component, which protruding edge was formed by the first plastic material flowing at least partly into the groove;
inserting the first component injection molding part into a second mold cavity;
injection a second plastic material into the second mold cavity to form the two-component plastic part.

10. The method in accordance with claim 9, further comprising the steps of providing the second mold cavity such that the protruding edge does not fit into a corresponding groove and squeezing the protruding edge such that it deforms when closing the second mold cavity.

11. The method in accordance with any one of claims 8 to 10, wherein the first plastic material has a Shore D hardness of above 20, in particular of above 50.

12. The method in accordance with one of claims 8 to 11, wherein the second plastic material has a Shore A hardness of below 80, in particular of below 50, and further in particular of below 30.

13. The method in accordance with any one of claims 8 to 12, wherein an injection point for the second plastic material is provided in proximity to the first edge or protruding edge, in particular wherein the distance between the injection point and the respective edge is below about 4 mm, in particular below about 3 mm, further in particular below about 2 mm.
